# EUROPÄISCHE PATENTSCHRIFT

(11) **EP 3 411 198 B1**
(45) Veröffentlichungstag und Bekanntmachung des Hinweises auf die Patenterteilung: **04.03.2020**
(21) Anmeldenummer: 17754257.8
(22) Anmeldetag: 04.08.2017
(51) Int. Cl.: B25J 9/16

(54) **ROBOTERANLAGE**
ROBOT SYSTEM
INSTALLATION ROBOTISÉE

(30) Priorität: 29.04.2017 DE 102017004199
(43) Veröffentlichungstag der Anmeldung: 12.12.2018
(73) Patentinhaber: Audi AG, 85045 Ingolstadt (DE)
(72) Erfinder: GEIER, Anton, 85051 Ingolstadt (DE); VOLLNHALS, Ralf, 85049 Ingolstadt (DE); RICHTER, Thomas, 85080 Gaimersheim (DE)
(86) Internationale Anmeldenummer: PCT/EP2017/000953
(87) Internationale Veröffentlichungsnummer: WO 2018/196943

(56) Entgegenhaltungen:
- WO-A1-2007/042149
- DE-A1- 10 242 710
- DE-U1-202011 052 222
- US-A1- 2006 167 587

## Beschreibung

Die Erfindung betrifft eine Roboteranlage, umfassend wenigstens eine Abspannvorrichtung für eine Karosserie sowie eine Vermessungsvorrichtung zur Ermittlung der Abweichung der Position einer in der Abspannvorrichtung abgespannten Karosserie in X- und Y- Richtung gegenüber einer jeweiligen Referenzposition.

Es ist bekannt, dass in der industriellen Metallverarbeitung - beispielsweise beim Rohbau von Karosserien in der Automobilindustrie - Spannvorrichtungen zum Einsatz kommen, durch welche bereits teilweise gefertigte Werkstücke beziehungsweise Karosserien in einer Fertigungsstation in einer gewünschten Position fixiert werden. Für den dann folgenden Fertigungsprozess, wie beispielsweise dem Anschweißen von Blechteilen an eine Karosserie, ist es unerlässlich, dass die Positionierung der Karosserie mit einer hohen geometrischen Präzision erfolgt.

Eine für bestimmte hochpräzise Fertigungsschritte erforderliche Positioniergenauigkeit ist in einigen Fällen jedoch sehr schwer realisierbar, beispielsweise beim Einbringen von Masterlöchern im Bereich des Motorraums. Das Einbringen von Masterlöchern erfordert deshalb ein Höchstmaß an Präzision, weil sie als Referenzpunkte verwendet werden. Typischerweise sind zwei beidseitig angeordnete Masterlöcher in einem Motorraum einer Karosserie vorgesehen.

Die besondere Schwierigkeit beim positionsgenauen Einbringen von Masterlöchern liegt darin, dass eine Karosserie zwar mit einer gewissen Genauigkeit im Bereich ihrer Bodenplatte mittels einer Spannvorrichtung in der Fertigungsstation abgespannt werden kann, ihrerseits aber selber Toleranzen aufweist, womit in der Summe das zulässige Toleranzband für die Position eines Masterlochs bereits häufig verlassen ist. Somit muss die Position eines Lochwerkzeug zum Lochen von Masterlöchern im Motorraum unter Berücksichtigung einer jeweiligen zu ermittelnden individuellen relativen Abweichung von einer Sollposition korrigiert werden, um sicherzustellen, dass ein jeweiliges Masterloch mit der erforderlichen Genauigkeit in die Karosserie eingebracht wird.

Eine individuelle Korrektur einer Arbeitsposition eines Lochwerkzeuges stellt insoweit eine besondere Herausforderung dar, als auf dieses während eines Lochvorganges erhebliche mechanische Kräfte wirken, welche nach außen abgetragen werden müssen.

Gemäß dem Stand der Technik werden die Masterlöcher über Lochzangen erzeugt, die auf Schweißteilen starr montiert sind und über Roboter-Lineareinheiten in Fahrzeugrichtung (Y-Richtung) und quer dazu (X-.Richtung) an der Karosserie vorpositioniert werden. Diese Vorpositionierung der Lochzangen erfolgt auf Fahrzeugnulllage des zu lochenden Bauteils. Zur Ermittlung des erforderlichen Zustellmaßes wird ein stationäres Messsystem verwendet, das ein Stichmaß ausgehend von zwei Bezugspunkten an der Karosse ermittelt. Nach Auswertung der Messung werden die Lochzangen unter Berücksichtigung der Y- Abweichung nur in Y- Richtung zugestellt, also quer zur axialen Erstreckung der Karosserie, und es wird anschließend beidseitig gelocht. Die Blechabfälle werden in einem kleinen Auffangbehälter innerhalb des Zangenkörpers über ein Vakuumsystem abgefördert und in einem Behälter gesammelt.

Die DE 20 2011 052222 U1 offenbart eine Bearbeitungseinrichtung für Werkstücke, insbesondere Fahrzeugkarosserien oder Karosserieteile, wobei die Bearbeitungseinrichtung eine Positioniereinrichtung mit mindestens einem Positionierantrieb für ein Werkstück und/oder für einen Werkstückträger und einen oder mehrere mehrachsige Manipulatoren mit einem Bearbeitungswerkzeug sowie mit einer Manipulatorsteuerung aufweist. Ein Positionierantrieb (20, 21) ist mit der Manipulatorsteuerung verbunden und als weitere Manipulatorachse steuerbar.

Nachteilig an diesem Stand der Technik ist, dass derartige Lösungen sehr aufwändig sind, insbesondere auch beim beidseitigen Lochen von mehreren Masterlöchern. Zudem werden Abweichungen in X-Richtung, also längs der axialen Erstreckung der Karosserie, hierdurch nicht ausgeglichen.

Das Patentdokument DE 102 42 710 A1 offenbart ein Verfahren zum Herstellen eines Verbindungsbereiches auf einem Werkstück mit einem robotergeführten Bearbeitungswerkzeug, welches fest mit einem Sensorsystem zur Positionsbestimmung verbunden ist.

Ausgehend von diesem Stand der Technik ist es Aufgabe der Erfindung, eine Roboteranlage bereitzustellen, welche die zuvor genannten Nachteile vermeidet.

Diese Aufgabe wird gelöst durch eine Roboteranlage der eingangs genannten Art. Diese ist gekennzeichnet durch
- wenigstens eine Zustellverriegelungseinheit mit einer mittels jeweiliger Antriebe in X- und Y- Richtung beweglichen ersten Kopplungsvorrichtung, welche innerhalb ihres Arbeitsbereiches an einer vorgebbaren Position verriegelbar ist,
- eine Steuervorrichtung, welche dafür vorgesehen ist, die Zustellverrieglungseinheit derart anzusteuern, dass die erste Kopplungsvorrichtung unter Berücksichtigung der ermittelten Positionsabweichungen in eine Arbeitsposition bewegt und dort verriegelt wird,
- einen Industrieroboter mit einer zweiten Kopplungsvorrichtung und einem mit dieser starr verbundenen Werkzeug,
- wobei die Steuervorrichtung dafür vorgesehen ist, den Industrieroboter derart anzusteuern beziehungsweise zu bewegen, dass die zweite Kopplungsvorrichtung mit der ersten Kopplungsvorrichtung in deren Arbeitsposition unter Berücksichtigung der ermittelten Positionsabweichungen kraftschlüssig verbunden ist und das Werkzeug dadurch in der Arbeitsposition abgespannt ist.

Die Grundidee der Erfindung besteht darin, ein jeweiliges Werkzeug beziehungsweise eine jeweilige Lochzange nicht mehr fest auf zumeist beiderseits der Spannstation vorgesehene Zustelleinheiten anzuordnen und zusammen mit den beweglichen Teilen der Zustelleinheiten in ihrer Position anzupassen, sondern wenigstens eine individuell in X- und Y- Richtung justierbare Zustellverriegelungseinheit vorzusehen, welche wenigstens eine erste Kopplungsvorrichtung umfasst. Eine Bewegung des Werkzeugs beziehungsweise der Lochzange in die gewünschte Arbeitsposition erfolgt mittels des Industrieroboters unabhängig von einer Bewegung der Zustellverriegelungseinheit und erst nach deren Justieren. In der Arbeitsposition sind erste und zweite Kopplungsvorrichtung kraftschlüssig miteinander verbunden und eventuell auf das Werkzeug beziehungsweise die Lochzange wirkende Kräfte können über die Zustellverriegelungseinheit nach unten abgetragen werden. Hierzu ist es wesentlich, dass die Zustellverriegelungseinheit vor dem eigentlichen Bearbeitungs- beziehungsweise Lochvorgang verriegelt ist, also deren beweglicher Teil arretiert ist.

Sowohl eine erfindungsgemäße Zustellverrieglungseinheit als auch eine konventionellen Zustelleinheit sind für die Aufnahme von bei einem derartigen Bearbeitungsvorgang wirkenden hohen Kräften auszulegen und damit aus mechanischer Sicht relativ aufwändig. Der große Vorteil einer erfindungsgemäßen Zustellverriegelungseinheit liegt jedoch darin, dass deren Verfahrweg sich letztendlich auf eine reine Korrekturbewegung beschränkt, also im Bereich von wenigen Zentimetern liegen kann, und eine längere Zustellbewegung - beispielsweise von einer Parkposition seitlich der Spannstation in Richtung einer Arbeitsposition im Motorraum - entfällt. Der konstruktive Aufwand ist daher in vorteilhafter Weise deutlich reduziert gegenüber einer konventionellen Zustelleinheit, welche dafür ausgelegt sein muss, ein Werkzeug beziehungsweise eine Lochzange über einen deutlich längeren Weg zu verfahren.

Eine Zustellverriegelungseinheit ohne ein starr damit verbundenes Werkzeug stellt eine bedeutend kleinere Störkontur dar als eine Zustelleinheit mit darauf angeordnetem Werkzeug. Daher muss eine erfindungsgemäße Zustellverriegelungseinheit im nicht-benötigten Zustand letztendlich auch nicht wesentlich aus dem Bereich von deren Arbeitsposition verfahren werden. Der eigentliche Transport des Werkzeugs beziehungsweise der Lochzange von einer Parkposition zu der Zustellverriegelungseinheit erfolgt erfindungsgemäß mittels des Industrieroboters. Dieser zeichnet sich einerseits durch eine hohe Flexibilität von beispielsweise sechs Bewegungsfreiheitsgraden sowie eine hohe Reichweite von beispielsweise 2m - 3m aus.

Somit ist es problemlos möglich, ein Werkzeug beziehungsweise eine Lochzange von einer Parkposition in einem Bereich am Rand der Spannstation in eine jeweilige Arbeitsposition im Bereich der Zustellverriegelungseinheit zu verbringen. Andererseits ist die mechanische Belastbarkeit beziehungsweise die Traglast eines Industrieroboters im Verhältnis gering und beträgt je nach Ausführungsform beispielsweise 20kg bis 100kg für Standardmodelle. Die mechanischen Belastungen, welche durch beim Betrieb einer Lochzange auf einen diese tragenden Industrieroboter wirken, sind ungleich höher, so dass ein Industrieroboter alleine und ohne Zustellverrieglungseinheit nicht für den erfindungsgemäßen Zweck ausreicht.

Die erfindungsgemäße Kombination von Zustellverrieglungseinheit und Bewegung des Werkzeugs beziehungsweise der Lochzange durch einen Industrieroboter vereint die Vorteile beider Systeme miteinander. Hierbei ist der Industrieroboter bezüglich seiner Traglast nur derart auszulegen, dass er den sicheren Transport des Werkzeugs beziehungsweise der Lochzange zur Zustellverriegelungseinheit gewährleisten kann. Die Zustellverriegelungseinheit ist bezüglich ihres Bewegungsspielraums nur derart auszulegen, dass sie in der Lage ist, die eigentlichen Justierbewegungen auszuführen und im Übrigen stationär in einem Bereich des Abspannbereiches angeordnet ist, in dem sie keine hinderliche Störkontur darstellt, beispielsweise mittig im Bodenbereich.

Eine Zustellverriegelungseinheit umfasst einen stehenden Teil, mit welchem diese beispielsweise auf einer Bodenfläche befestigt ist und eine relativ dazu in X- und Y-Richtung beweglichen Teil, welcher auch wenigstens eine erste Kopplungsvorrichtung umfasst. Die Grundfläche einer Zustellverriegelungseinheit kann beispielsweise einen quadratischen Grundriss mit einer Kantenlänge von 50cm oder dergleichen aufweisen. Für die Justierbewegung in X- und Y- Richtung, welche beispielsweise einige Zentimeter betragen kann, sind typischerweise Antriebe wie ein jeweiliger Schneckenantrieb oder dergleichen vorgesehen, welche von einer Steuereinheit kontrollierbar sind. Eine Verriegelung beziehungsweise Arretierung der Zustellverriegelungseinheit kann mittels Bremsen erfolgen. Die wenigstens eine erste Kopplungsvorrichtung kann beispielsweise als quaderähnliche Vertiefung in dem beweglichen Teil der Zustellverriegelungseinheit realisiert sein, in welche ein darauf in seiner Form angepasster quaderähnlicher Zapfen einer zweiten Kopplungsvorrichtung eingeführt werden kann, sodass eine kraftschlüssige Verbindung zwischen den beiden Kopplungsvorrichtungen entsteht.

Eine absolute Referenzposition beim Lochen von Masterlöchern in dem Motorraum einer Karosserie kann insbesondere abhängig sein von dem Stichmaß zwischen Federbeintopf zum Längsträger, jeweils individuell auf der rechten und der linken Seite des Motorraums.
Ein typischer Ablauf einer des Lochens von Masterlöchern in eine Karosserie ist beispielsweise folgender:
- eine Karosserie wird in der Abspannvorrichtung über die Bodenspanntechnik abgespannt,
- das erforderliche Zustellmaß für das Werkzeug beziehungsweise die Lochzange aus einer Parkposition in die Arbeitsposition wird vorzugsweise von in der Roboteranlage ohnehin vorhandenen Inline-Messrobotern über das Stichmaß ausgehend von zwei Bezugspunkten an der Karosserie ermittelt,
- an eine Zustellverriegelungseinheit, die in Fahrzeugnulllage des zu lochenden Bauteils der Karosserie gefahren ist, wird die Abweichung in X und Y- Richtung zu einem Sollzustellmaß übergeben und die Zustellverriegelungseinheit entsprechend maßgenau positioniert beziehungsweise nachgeregelt,
- die ermittelte Abweichung in X und Y- Richtung wird auch an den Industrieroboter übergeben, der die Abweichung ebenfalls nachregelt und die Lochzange zu der Zustellverriegelungseinheit verbringt und dort arretiert,
- die Lochzange locht das Masterloch,
- die Lochzange wird von der Zustellverriegelungseinheit gelöst und der Industrieroboter verfährt mit der Lochzange in eine Parkposition beziehungsweise Grundstellung.

Gemäß einer weiteren Ausgestaltungsform der erfindungsgemäßen Roboteranlage weist die Zustellverrieglungseinheit mehrere jeweilige erste Kopplungsvorrichtungen auf, mit welchen durch eine entsprechende Bewegung des Industrieroboters wahlweise die zweite Kopplungsvorrichtung mit dem damit starr verbundenen Werkzeug verbindbar ist. Es sind aber auch mehrere, insbesondere zwei, Zustellverriegelungseinheiten denkbar, welche jeweils eine erste Kopplungsvorrichtung aufweisen, mit welchen die zweite Kopplungsvorrichtung wahlweise verbindbar ist.

Typischerweise sind je Motorraum einer Karosserie zwei Masterlöcher vorzusehen, welche gemäß dem Stand der Technik auch mittels zweier Werkzeuge beziehungsweise zweier Lochzangen eingebracht werden. Erfindungsgemäß ist dies in vorteilhafter Weise mittels eines einzigen Werkzeugs ermöglicht, welches dann mit unterschiedlichen in ein und derselben Zustellverriegelungseinrichtung befindlichen ersten Kopplungsvorrichtungen verbunden werden kann. Hierbei wird das Werkzeug zunächst mittels einer der beiden ersten Kopplungsvorrichtungen arretiert, das erste Loch gestanzt, danach erfolgt eine Umorientierung und Arretierung in der anderen der beiden ersten Kopplungsvorrichtungen und das zweite Loch wird gestanzt.

Gegebenenfalls kann während der Umorientierungsphase des Werkzeugs eine erneute Bestimmung der Positionsabweichung für das zweite Masterloch und eine entsprechende Nachjustierung der Zustellverriegelungseinheit erfolgen. Ein ähnliches Vorgehen ist auch prinzipiell mit zwei unabhängig voneinander ansteuerbaren Zustellverriegelungseinheiten möglich, der sich ergebende Vorteil ist in jedem Fall derjenige, dass für mehrere Masterlöcher jeweils nur ein Werkzeug erforderlich ist.

Um eine Umorientierung zu vereinfachen, ist es vorteilhaft, das Werkzeug beziehungsweise die zweite Kopplungsvorrichtung ansatzweise symmetrisch auszubilden, so dass diese(s) in vergleichbarer Weise beiderseits im Motorraum einsetzbar ist. Zudem erweist es sich als günstig, die zweite Kopplungsvorrichtung des Werkzeugs derart auszugestalten, dass sie sich in verbundenem Zustand auf der ersten Kopplungsvorrichtung einer jeweiligen bodennah angeordneten Zustellverriegelungseinheit abstützen kann und so besonders einfach senkrecht wirkende Kräfte nach unten abtragen kann.

Das Werkzeug ist gemäß einer bevorzugten Erfindungsvariante eine Lochzange, es kann aber ebenso eine Schweißzange, eine sonstige Schweißvorrichtung oder auch eine Schraubvorrichtung oder dergleichen sein.

Gemäß einer weiteren Ausführungsform der Roboteranlage weist die Lochzange einen Sammelbehälter zum Auffangen von beim Lochen entstehenden Abfallmaterial auf. Hierdurch ist in vorteilhafter Weise vermieden, dass sich der beim Lochen entstehende Abfall im Abspannbereich der Roboteranlage ansammelt.

Entsprechend einer besonders bevorzugten Ausführungsvariante der erfindungsgemäßen Roboteranlage umfasst diese wenigstens einen weiteren Industrieroboter zur weiteren Bearbeitung einer in der Abspannvorrichtung abgespannten Karosserie. Der Grundgedanke dieser Ausführungsform besteht in einer Integration der Funktionalität des Lochens von Masterlöchern in eine bereits bestehende Fertigungsstation, so dass ausschließlich für die Funktion des Einbringens von Masterlöchern vorgesehene Fertigungsstationen in vorteilhafter Weise entfallen können. Sowohl die Zustellverriegelungseinheiten als auch der das Werkzeug tragende Industrieroboter sind im vorderen Bereich der Karosserie auf Höhe des Motorraums angeordnet. Eine zeitgleiche parallele Erledigung von Arbeitsumfängen im hinteren Bereich der Karosserie durch weitere Industrieroboter ist daher ohne weiteres möglich.

In besonders bevorzugter Weise ist die Vermessungsvorrichtung, beziehungsweise eine von deren Komponenten wie beispielsweise eine Kamera, von dem wenigstens einen weiteren Industrieroboter getragen. So kann ein ohnehin für eigentlich andere Zwecke vorgesehener weiterer Industrieroboter während einer ungenutzten Phase dafür genutzt werden, eine entsprechende Vermessung durchzuführen und die Abweichungen der Position für die zu lochenden Masterlöcher zu bestimmen.

Gemäß einer weiteren Variante der erfindungsgemäßen Roboteranlage umfasst diese eine Transportvorrichtung zum Ein- und Ausfördern einer jeweiligen Karosserie zu einer Abspannposition, an welcher die Karosserie mittels der Abspannvorrichtung abgespannt werden kann. Hierdurch wird eine Einbindung in eine Serienproduktion von Karosserien vereinfacht.

In besonders bevorzugter Weise ist die Steuervorrichtung dafür vorgesehen, die Zustellverrieglungseinheit und den Industrieroboter derart anzusteuern, dass diese bei bereits gekoppelter erster und zweiter Kopplungsvorrichtung gemeinsam in Arbeitsposition bewegt werden. Dies ermöglicht beispielsweise eine Kopplung von erster und zweiter Kopplungsvorrichtung an einem für eine jeweilige Arbeitsposition festen Ort unabhängig der ermittelten Abweichungen, wobei die eigentliche Justierbewegung zum Ausgleich der ermittelten Abweichung dann in einer synchronen Bewegung von Zustellverrieglungseinheit und Industrieroboter beziehungsweise des mit diesem beziehungsweise dessen Arm starr verbundenen Werkzeugs erfolgt. Nach Erreichen der Arbeitsposition wird die Zustellverriegelungseinheit dann verriegelt. Der Steuerungsaufwand wird hierdurch in vorteilhafter Weise reduziert.

Gemäß einer weiteren Ausgestaltungsform der erfindungsgemäßen Roboteranlage ist der Industrieroboter dafür vorgesehen ist, während der gemeinsamen Bewegung von der Bewegung der Zustellverrieglungseinheit geführt zu werden. Dies bedeutet, dass die Zustellverriegelungseinheit die eigentlich maßgebliche Justierbewegung durchführt und der über die gekoppelte erste und zweite Kopplungsvorrichtung damit verbundene Industrieroboter beziehungsweise das mit diesem beziehungsweise dessen Roboterarm starr verbundene Werkzeug durch die Bewegung der Zustellverriegelungseinheit geführt wird. In vorteilhafter Weise weist der Industrieroboter einen entsprechenden Betriebsmodus auf, in welchem er bei Einwirken einer Führungskraft auf dessen Roboterarm eine entsprechende Bewegung in Richtung der Kraft durchführt, also "weich" geschaltet wird. Prinzipiell ist es auch möglich, dass der Industrieroboter die maßgebliche Bewegung durchführt und die in diesem Fall "weich" geschaltete Zustellverriegelungseinheit dadurch geführt wird.

Die erfindungsgemäße Aufgabe wird auch gelöst durch ein Verfahren zum Betreiben einer Roboteranlage nach einem der Ansprüche 1 bis 9, umfassend folgende Schritte:
- Abspannen einer Karosserie mittels der Abspannvorrichtung,
- Ermittlung der Abweichung der Position der in der Abspannvorrichtung abgespannten Karosserie in X- und Y- Richtung gegenüber einer jeweiligen Referenzposition,
- Ansteuern der Zustellverrieglungseinheit derart, dass die erste Kopplungsvorrichtung unter Berücksichtigung der ermittelten Positionsabweichungen in eine Arbeitsposition bewegt wird,
- Verriegeln der Zustellverrieglungseinheit in der Arbeitsposition,
- Ansteuern des Industrieroboters unter Berücksichtigung der ermittelten Positionsabweichungen derart, dass die zweite Kopplungsvorrichtung mit der ersten Kopplungsvorrichtung in deren Arbeitsposition kraftschlüssig verbunden ist,
- Bearbeitung der Karosserie mit dem Werkzeug.

Die sich daraus ergebenden Vorteile wurden zuvor im Rahmen der Beschreibung der erfindungsgemäßen Roboteranlage erörtert. Hierbei sei explizit auf die Verfahrensvariante verwiesen, mittels ein und demselben Werkzeug sequentiell an mehreren Positionen Arbeitsumfänge wie das Lochen eines Masterlochs durchzuführen.

Anhand der in den Zeichnungen dargestellten Ausführungsbeispiele sollen die Erfindung, weitere Ausführungsformen und weitere Vorteile näher beschrieben werden.

Es zeigen:
- Fig. 1: eine exemplarische erste Roboteranlage in einem ersten Arbeitszustand,
- Fig. 2: eine exemplarische erste Roboteranlage in einem zweiten Arbeitszustand,
- Fig. 3: einen Ausschnitt einer zweiten Roboteranlage in einem ersten Arbeitszustand,
- Fig. 4: einen Ausschnitt einer zweiten Roboteranlage in einem zweiten Arbeitszustand,
- Fig. 5: einen Ausschnitt einer zweiten Roboteranlage in einem dritten Arbeitszustand,
- Fig. 6: eine exemplarische dritte Roboteranlage sowie
- Fig. 7: Zustellverrieglungseinheit mit Werkzeug

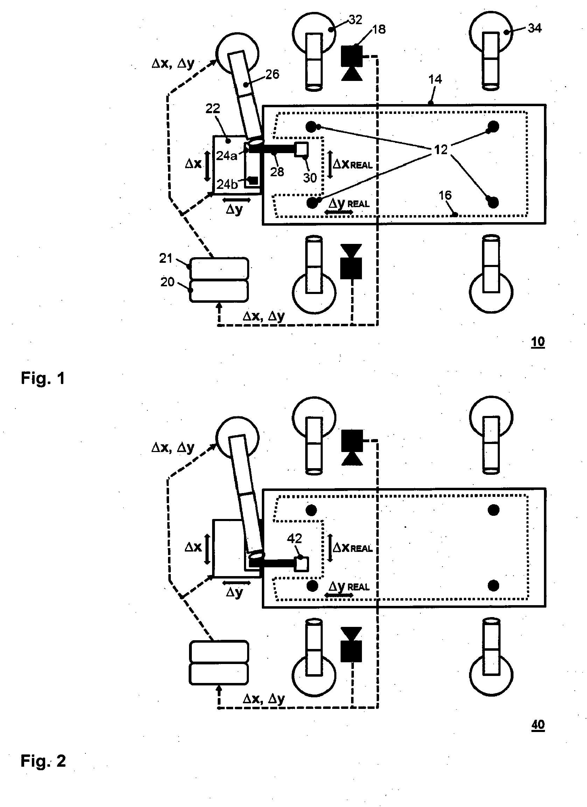

Figur 1 zeigt eine exemplarische erste Roboteranlage 10 in einem ersten Arbeitszustand in einer schematischen Draufsicht. Eine Abspannvorrichtung weist einen Abspannbereich 14 sowie vier im Rechteck angeordnete Spannstellen 12 auf, mittels welcher eine Karosserie 16, welche in etwa eine Grundfläche von 2m x 5m aufweist, abgespannt ist. Eine Vermessungsvorrichtung weist zwei Kameras 18 sowie eine Auswerteeinheit 20 auf, durch welche anhand von den Kameras 18 erstellter Bilder von der Karosserie 16 Abweichungen in X- und Y- Richtung von deren Referenzposition ermittelbar sind. Die realen Abweichungen sind mit den Bezugszeichen Δx _{REAL}, Δy _{REAL} gekennzeichnet.

Die daraus ermittelten Abweichungswerte Δx, Δy werden einer Steuervorrichtung 21 zur Verfügung gestellt, welche sowohl dafür vorgesehen ist, eine Zustellverriegelungseinheit 22 derart anzusteuern, dass eine Abweichung Δx _{REAL}, Δy _{REAL} der Karosserie 16 von ihrer Referenzposition ausgeglichen wird, als auch in entsprechender Weise einen Industrieroboter 26 anzusteuern. Die Zustellverriegelungseinheit 22 weist zwei erste Kopplungsvorrichtungen 24 a/b auf, welche beispielsweise als herausstehende T-Profile ausgeprägt sein können und welche wahlweise formschlüssig in einen entsprechenden Profilkanal einer damit korrespondierenden zweiten Kopplungsvorrichtung eingeführt werden können, um so eine kraftschlüssige Verbindung herzustellen.

Der Industrieroboter 26 trägt am distalen Ende seines Roboterarms eine solche zweite Kopplungsvorrichtung 28, welche starr mit einem Werkzeug 30, in diesem Fall eine Lochzange, verbunden ist. Die Steuervorrichtung 21 ist dafür vorgesehen, den Industrieroboter 26 derart anzusteuern und zu bewegen, dass die zweite Kopplungsvorrichtung 28 mit einer der beiden ersten Kopplungsvorrichtungen 24a/b in deren jeweiliger Arbeitsposition unter Berücksichtigung der ermittelten Positionsabweichungen kraftschlüssig verbunden wird und das Werkzeug 30 dadurch in der Arbeitsposition abgespannt ist. Je nach gewählter erster Kopplungsvorrichtung 24 a/b ergibt sich somit eine andere Arbeitsposition für das Werkzeug 30.

Des Weiteren weist die dargestellte Roboteranlage weitere Industrieroboter 32, 34 auf, welche für weitere Bearbeitungszwecke vorgesehen sind, in diesem Fall dem Anschweißen von weiteren Bauteilen an die Karosserie 16. Ein paralleles Bearbeiten der Karosserie 16 im Motorraumbereich durch den Industrieroboter 26 und im Heckbereich durch die weiteren Industrieroboter 32, 34 ist aufgrund von deren unterschiedlichen Arbeitsbereichen möglich.

Figur 2 zeigt eine exemplarische erste Roboteranlage entsprechend Figur 1 in einem zweiten Arbeitszustand 40. Im Unterschied dazu ist ein Werkzeug 42 mit seiner zweiten Kopplungsvorrichtung in einer anderen ersten Kopplungsvorrichtung der Zustellverriegelungseinheit arretiert, so dass sich daraus eine andere Arbeitsposition für das Werkzeug 42 ergibt.

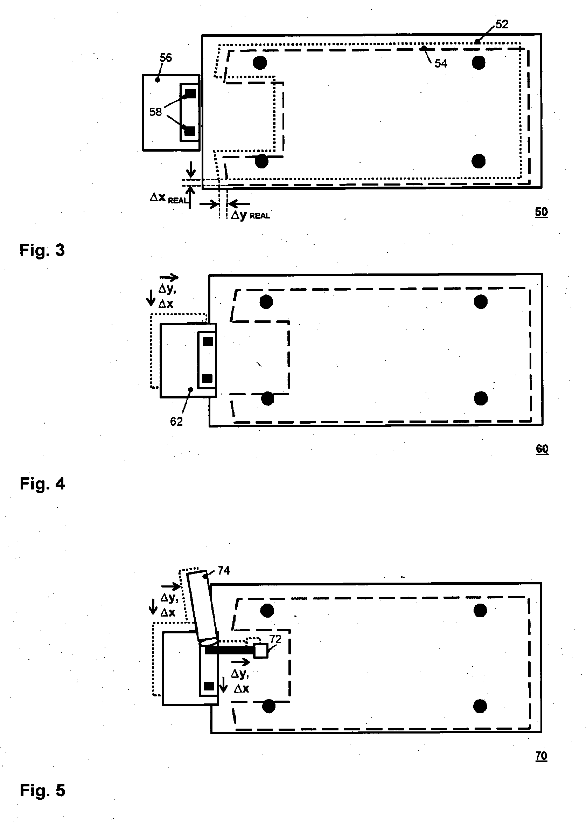

Figur 3 zeigt einen Ausschnitt einer zweiten Roboteranlage in einem ersten Arbeitszustand 50. Eine Karosserie 54 ist in einer realen Position in einer Abspannvorrichtung abgespannt, wobei entsprechende Abweichungen Δx _{REAL}, Δy _{REAL} der Position zu einer Sollposition 52 bestehen. In Fahrzeugrichtung vor dem Motorinnenraum ist eine Zustellverriegelungseinheit 56 mit zwei ersten Kopplungsvorrichtungen 58 in ihrem Grundzustand dargestellt.

Figur 4 zeigt einen Ausschnitt einer zweiten Roboteranlage in einem zweiten Arbeitszustand 60. Im Vergleich zu der Figur 3 ist eine Zustellverriegelungseinheit 62 nunmehr um Korrekturwerte Δx, Δy justiert worden, um die Abweichungen der real abgespannten Karosserie von ihrer Sollposition zu kompensieren.

Figur 5 zeigt einen Ausschnitt einer zweiten Roboteranlage in einem dritten Arbeitszustand 70. Im Vergleich zu der Figur 4 ist nunmehr ein Arm eines Industrieroboters 74 gezeigt, welcher gegenüber seiner programmgemäßen Position ebenfalls um Korrekturwerte Δx, Δy justiert worden ist und durch welchen ein Werkzeug 72 in der Zustellverriegelungseinheit abgespannt ist.

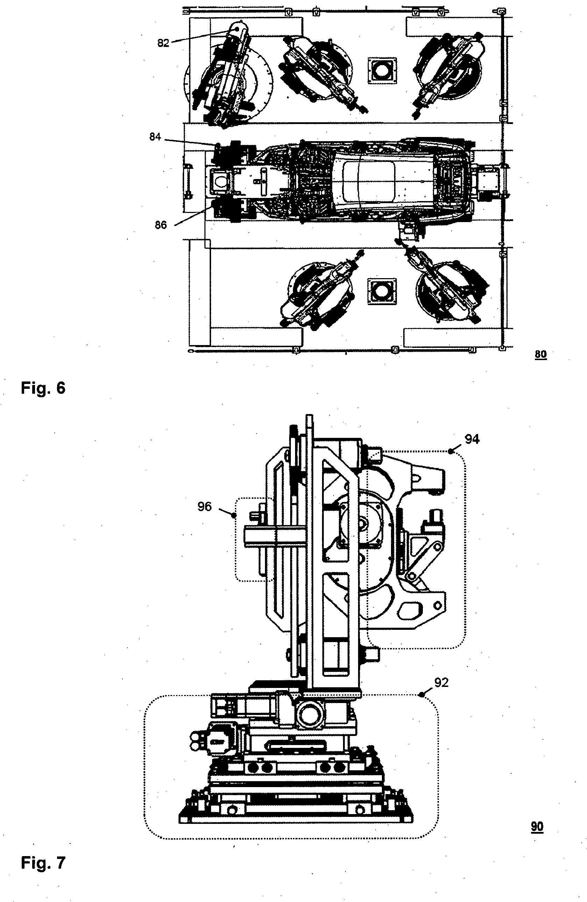

Figur 6 zeigt eine exemplarische dritte Roboteranlage 80 mit einem Industrieroboter 82, welcher ein Werkzeug trägt, in einer Draufsicht. Der Industrieroboter ist dafür vorgesehen, das Werkzeug wahlweise mit einer der beiden Zustellverriegelungseinheiten 84, 86 starr zu verbinden beziehungsweise darüber abzuspannen.

Figur 7 zeigt in einer Darstellung 90 eine Zustellverrieglungseinheit 92 mit einem darauf abgespannten Werkzeug 94, in diesem Falle eine Lochzange. Im rückwärtigen Bereich des Werkzeugs ist ein Adaptermodul 96 vorgesehen, mittels welchem das distale Ende eines Arms eines Industrieroboters mit dem Werkzeug 94 verbunden werden kann.

### Bezugszeichenliste

- 10: exemplarische erste Roboteranlage in erstem Arbeitszustand
- 12: Abspannvorrichtung (Spannstellen)
- 14: Abspannvorrichtung (Abspannbereich)
- 16: Karosserie
- 18: Vermessungsvorrichtung (Kamera)
- 20: Vermessungsvorrichtung (Auswerteeinheit)
- 21: Steuervorrichtung
- 22: Zustellverrieglungseinheit
- 24a/b: erste Kopplungsvorrichtungen von Zustellverrieglungseinheit
- 26: Industrieroboter
- 28: zweite Kopplungsvorrichtung
- 30: Werkzeug
- 32: weiterer Industrieroboter
- 34: weiterer Industrieroboter
- 40: exemplarische erste Roboteranlage in zweitem Arbeitszustand
- 42: Werkzeug
- 50: Ausschnitt von zweiter Roboteranlage in erstem Arbeitszustand
- 52: Referenzposition von Karosserie
- 54: Karosserie in Realposition
- 56: Zustellverrieglungseinheit
- 58: erste Kopplungsvorrichtungen von Zustellverrieglungseinheit
- 60: Ausschnitt von zweiter Roboteranlage in zweitem Arbeitszustand
- 62: Zustellverrieglungseinheit in angepasster Arbeitsposition
- 70: Ausschnitt von zweiter Roboteranlage in drittem Arbeitszustand
- 72: Werkzeug in angepasster Arbeitsposition
- 74: Industrieroboter (Arm)
- 80: exemplarische dritte Roboteranlage
- 82: Industrieroboter
- 84: erste Zustellverrieglungseinheit
- 86: zweite Zustellverrieglungseinheit
- 90: Zustellverrieglungseinheit mit Werkzeug
- 92: Zustellverrieglungseinheit
- 94: Adaptermodul für Industrieroboter

## Patentansprüche

1. Roboteranlage (10, 40, 50, 60, 70), umfassend wenigstens
• eine Abspannvorrichtung (12, 14) für eine Karosserie (16, 54),
• eine Vermessungsvorrichtung (18, 20) zur Ermittlung der Abweichung (Δx _{RE-AL}, Δy _{REAL}) der Position einer in der Abspannvorrichtung (12, 14) abgespannten Karosserie (16, 54) in X- und Y- Richtung gegenüber einer jeweiligen Referenzposition (52),
**gekennzeichnet durch**,
• wenigstens eine individuell justierbare Zustellverriegelungseinheit (22, 56 62) umfassend einen stehenden Teil und einen beweglichen Teil mit einer mittels jeweiliger Antriebe in X- und Y- Richtung beweglichen ersten Kopplungsvorrichtung (24a/b, 58), welche innerhalb ihres Arbeitsbereiches an einer vorgebbaren Position verriegelbar ist,
• eine Steuervorrichtung (21), welche dafür vorgesehen ist, die Zustellverrieglungseinheit (22, 56 62) derart anzusteuern, dass die erste Kopplungsvorrichtung (24a/b, 58) unter Berücksichtigung der ermittelten Positionsabweichungen (Δx _{REAL}, Δy _{REAL}) in eine Arbeitsposition bewegt und dort verriegelt wird,
• einen Industrieroboter (26, 74) mit einer zweiten Kopplungsvorrichtung (28) und einem mit dieser starr verbundenen Werkzeug (30, 42),
• wobei die Steuervorrichtung (21) dafür vorgesehen ist, den Industrieroboter (26, 74) unabhängig von der Bewegung der Zustellverrieglungseinheit und erst nach deren Justieren derart anzusteuern, dass die zweite Kopplungsvorrichtung (28) mit der ersten Kopplungsvorrichtung (24a/b, 58) in deren Arbeitsposition unter Berücksichtigung der ermittelten Positionsabweichungen (Δx _{REAL}, Δy _{REAL}) kraftschlüssig verbunden ist und das Werkzeug (30, 42) dadurch in der Arbeitsposition abgespannt ist.

2. Roboteranlage nach Anspruch 1, **dadurch gekennzeichnet, dass** die Zustellverrieglungseinheit (22, 56 62) mehrere jeweilige erste Kopplungsvorrichtungen (24a/b, 58) aufweist, mit welchen durch eine entsprechende Bewegung des Industrieroboters (26, 74) wahlweise die zweite Kopplungsvorrichtung (28) mit dem damit starr verbundenen Werkzeug (30, 42) verbindbar ist.

3. Roboteranlage nach Anspruch 1 oder 2, **dadurch gekennzeichnet, dass** das Werkzeug (30, 42) eine Lochzange ist.

4. Roboteranlage nach Anspruch 3, **dadurch gekennzeichnet, dass** die Lochzange einen Sammelbehälter zum Auffangen von beim Lochen entstehenden Abfallmaterial aufweist.

5. Roboteranlage nach einem der vorherigen Ansprüche, **dadurch gekennzeichnet, dass** diese wenigstens einen weiteren Industrieroboter (32, 34) zur weiteren Bearbeitung einer in der Abspannvorrichtung (12, 14) abgespannten Karosserie (16, 54) umfasst.

6. Roboteranlage nach einem Anspruch 5, **dadurch gekennzeichnet, dass** die Vermessungsvorrichtung (18, 20) von dem wenigstens einen weiteren Industrieroboter (32, 34) getragen ist.

7. Roboteranlage nach einem der vorherigen Ansprüche, **dadurch gekennzeichnet, dass** diese eine Transportvorrichtung zum Ein- und Ausfördern einer jeweiligen Karosserie (16, 54) zu einer Abspannposition, an welcher die Karosserie (16, 54) mittels der Abspannvorrichtung (12, 14) abgespannt werden kann, umfasst.

8. Roboteranlage nach einem der vorherigen Ansprüche, **dadurch gekennzeichnet, dass** die Steuervorrichtung (21) dafür vorgesehen ist, die Zustellverrieglungseinheit (22, 56 62) und den Industrieroboter (26, 74) derart anzusteuern, dass diese bei bereits gekoppelter erster (24a/b, 58) und zweiter Kopplungsvorrichtung (28) gemeinsam in Arbeitsposition bewegt werden.

9. Roboteranlage nach Anspruch 8, **dadurch gekennzeichnet, dass** der Industrieroboter dafür vorgesehen ist, während der gemeinsamen Bewegung von der Bewegung der Zustellverrieglungseinheit (22, 56 62) geführt zu werden.

10. Verfahren zum Betreiben einer Roboteranlage nach einem der Ansprüche 1 bis 9, umfassend folgende Schritte:
• Abspannen einer Karosserie (16, 54) mittels der Abspannvorrichtung (12, 14),
• Ermittlung der Abweichung (Δx _{REAL}, Δy _{REAL}) der Position der in der Abspannvorrichtung (12, 14) abgespannten Karosserie (16, 54) in X- und Y- Richtung gegenüber einer jeweiligen Referenzposition (52),
• Ansteuern der Zustellverrieglungseinheit (22, 56 62) derart, dass die erste Kopplungsvorrichtung (24a/b, 58) unter Berücksichtigung der ermittelten Positionsabweichungen (Δx _{REAL}, Δy _{REAL}) in eine Arbeitsposition bewegt wird,
• Verriegeln der Zustellverrieglungseinheit (22, 56 62) in der Arbeitsposition,
• Ansteuern des Industrieroboters (26, 74) unter Berücksichtigung der ermittelten Positionsabweichungen (Δx _{REAL}, Δy _{REAL}) derart, dass die zweite Kopplungsvorrichtung (28) mit der ersten Kopplungsvorrichtung (24a/b, 58) in deren Arbeitsposition kraftschlüssig verbunden ist,
• Bearbeitung der Karosserie (16, 54) mit dem Werkzeug (30, 42).

## Claims

1. Robot system (10, 40, 50, 60, 70), comprising at least
- one bracing apparatus (12, 14) for a vehicle body (16, 54),
- a measuring apparatus (18, 20) for determining the difference (Δx _{REAL}, Δy _{REAL}) between the position of a vehicle body (16, 54) braced in the bracing apparatus (12, 14) and a particular reference position (52) in the X and Y directions,
**characterised by**,
- at least one individually adjustable delivery locking unit (22, 56, 62) comprising a stationary part and a movable part with a first coupling apparatus (24a/b, 58) that is movable in the X and Y directions by means of respective drives and can be locked at a predefinable position within the working area thereof,
- a control apparatus (21), which is provided for the purpose of controlling the delivery locking unit (22, 56, 62) in such a manner that the first coupling apparatus (24a/b, 58) moves into a working position taking into account the determined position differences (Δx _{REAL}, Δy _{REAL}) and is locked there,
- an industrial robot (26, 74) having a second coupling apparatus (28) and a tool (30, 42) rigidly connected to the latter,
- wherein the control apparatus (21) is provided for the purpose of controlling the industrial robot (26, 74), independently of the movement of the delivery locking unit and not until after this has been adjusted, in such a manner that the second coupling apparatus (28) is connected to the first coupling apparatus (24a/b, 58) in the working position thereof in a force-fitting manner taking into account the determined position differences (Δx _{REAL}, Δy _{REAL}) and the tool (30, 42) is thereby braced in the working position.

2. Robot system according to claim 1, **characterised in that** the delivery locking unit (22, 56, 62) has multiple respective first coupling apparatus (24a/b, 58), with which, through a corresponding movement of the industrial robot (26, 74), the second coupling apparatus (28) can optionally be connected with the tool (30, 42) rigidly connected therewith.

3. Robot system according to claim 1 or 2, **characterised in that** the tool (30, 42) is a hole punch.

4. Robot system according to claim 3, **characterised in that** the hole punch has a collection bin for catching waste material produced during punching.

5. Robot system according to any one of the preceding claims, **characterised in that** this comprises at least one further industrial robot (32, 34) for further machining of a vehicle body (16, 54) braced in the bracing apparatus (12, 14).

6. Robot system according to a claim 5, **characterised in that** the measuring apparatus (18, 20) is carried by the at least one further industrial robot (32, 34).

7. Robot system according to any one of the preceding claims, **characterised in that** this comprises a transport apparatus for conveying a respective vehicle body (16, 54) in and out to a bracing position, at which the vehicle body (16, 54) can be braced by means of the bracing apparatus (12, 14).

8. Robot system according to any one of the preceding claims, **characterised in that** the control apparatus (21) is provided for the purpose of controlling the delivery locking unit (22, 56, 62) and the industrial robot (26, 74) in such a manner that these are moved jointly into working position, when first (24a/b, 58) and second coupling apparatus (28) are already coupled.

9. Robot system according to claim 8, **characterised in that** the industrial robot is provided for the purpose of being guided during the joint movement by the movement of the delivery locking unit (22, 56, 62).

10. Method for operating a robot system according to any one of claims 1 to 9, comprising the following steps:
- bracing of a vehicle body (16, 54) by means of the bracing apparatus (12, 14),
- determination of the difference (Δx _{REAL}, Δy _{REAL}) between the position of the vehicle body (16, 54) braced in the bracing apparatus (12, 14) and a particular reference position (52) in the X and Y directions,
- controlling of the delivery locking unit (22, 56, 62) in such a manner that the first coupling apparatus (24a/b, 58) is moved into a working position, taking into account the determined position differences (Δx _{REAL}, Δy _{REAL}),
- locking of the delivery locking unit (22, 56, 62) in the working position,
- controlling of the industrial robot (26, 74), taking into account the determined position differences (Δx _{REAL}, Δy _{REAL}), in such a manner that the second coupling apparatus (28) is connected to the first coupling apparatus (24a/b, 58) in the working position thereof in a force-fitting manner,
- machining of the vehicle body (16, 54) with the tool (30, 42).

## Revendications

1. Installation robotisée (10, 40, 50, 60, 70), comprenant au moins
- un dispositif d'ancrage (12, 14) pour une carrosserie (16, 54),
- un dispositif de mesure (18, 20) pour déterminer l'écart (Δx _{REAL}, Δy _{REAL}) de la position d'une carrosserie (16, 54) ancrée dans le dispositif d'ancrage (12, 14) dans les directions X et Y par rapport à un position de référence respective (52),
**caractérisée par**
- au moins une unité de verrouillage d'alimentation réglable individuellement (22, 56 62) comprenant une partie debout et une partie mobile avec un premier dispositif de couplage (24a/b, 58) mobile dans les directions X et Y au moyen d'entraînements correspondants, et qui peut être verrouillée dans sa zone de travail dans une position prédéfinie,
- un dispositif de commande (21) qui est prévu pour commander l'unité de verrouillage d'alimentation (22, 56 62) de telle sorte que le premier dispositif de couplage (24a/b, 58) se déplace dans une position de travail en tenant compte des écarts de position déterminés (Δx _{REAL}, Δy _{REAL}) et y est verrouillé,
- un robot industriel (26, 74) avec un second dispositif de couplage (28) et un outil (30, 42) relié de manière à celui-ci,
- dans lequel le dispositif de commande (21) est prévu pour commander le robot industriel (26, 74) indépendamment du déplacement de l'unité de verrouillage d'alimentation et seulement après son réglage, de telle sorte que le second dispositif de couplage (28) est connecté mécaniquement au premier dispositif de couplage (24a/b, 58) dans sa position de travail en tenant compte des écarts de position déterminés (Δx _{REAL}, Δy _{REAL}), et que l'outil (30, 42) est ainsi ancré dans la position de travail.

2. Installation robotisée selon la revendication 1, **caractérisée en ce que** l'unité de verrouillage d'alimentation (22, 56 62) présente une pluralité de premiers dispositifs de couplage respectifs (24a/b, 58) avec lesquels, par l'intermédiaire d'un déplacement correspondant du robot industriel (26, 74), le deuxième dispositif de couplage (28) peut être connecté de manière sélective avec l'outil connecté de manière rigide (30, 42).

3. Installation robotisée selon la revendication 1 ou 2, **caractérisée en ce que** l'outil (30, 42) est une pince de perforation.

4. Installation robotisée selon la revendication 3, **caractérisée en ce que** la pince de perforation présente un récipient de collecte pour collecter les déchets générés pendant une perforation.

5. Installation robotisée selon l'une des revendications précédentes, **caractérisée en ce qu'**elle comprend au moins un robot industriel supplémentaire (32, 34) pour le traitement supplémentaire d'une carrosserie (16, 54) ancrée dans le dispositif d'ancrage (12, 14).

6. Installation robotisée selon la revendication 5, **caractérisé en ce que** le dispositif de mesure (18, 20) est porté par le au moins un robot industriel supplémentaire (32, 34).

7. Installation robotisée selon l'une des revendications précédentes, **caractérisée en ce qu'**elle présente un dispositif de transport pour introduire une carrosserie respective (16, 54) dans une position d'ancrage, et pour l'en sortir, auquel la carrosserie (16, 54) peut être ancrée au moyen du dispositif d'ancrage (12, 14).

8. Installation robotisée selon l'une des revendications précédentes, **caractérisée en ce que** le dispositif de commande (21) est prévu pour commander l'unité de verrouillage d'alimentation (22, 56 62) et le robot industriel (26, 74) de telle sorte qu'ils sont déplacés par le premier (24a/b, 58) et le second dispositif de couplage (28) couplés dans la position de travail.

9. Installation robotisée selon la revendication 8, **caractérisée en ce que** le robot industriel est prévu pour être guidé par le déplacement de l'unité de verrouillage d'alimentation (22, 56 62) pendant le déplacement conjoint.

10. Procédé de fonctionnement d'une installation robotisée selon l'une des revendications 1 à 9, comprenant les étapes suivantes consistant à :
- ancrer une carrosserie (16, 54) au moyen du dispositif d'ancrage (12, 14),
- déterminer l'écart (Δx _{REAL}, Δy _{REAL}) de la position du carrosserie (16, 54) ancrée dans le dispositif d'ancrage (12, 14) dans les directions X et Y par rapport à une position de référence respective (52),
- commander l'unité de verrouillage d'alimentation (22, 56 62) de telle sorte que le premier dispositif de couplage (24a/b, 58) se déplace dans une position de travail en tenant compte des écarts de position déterminés (Δx _{REAL}, Δy _{REAL}),
- verrouiller l'unité de verrouillage d'alimentation (22, 56 62) dans la position de travail,
- commander le robot industriel (26, 74) en tenant compte des écarts de position déterminés (Δx _{REAL}, Δy _{REAL}), de telle sorte que le second dispositif de couplage (28) est connecté mécaniquement au premier dispositif de couplage (24a/b, 58) dans sa position de travail,
- usiner la carrosserie (16, 54) avec l'outil (30, 42).
